# EUROPEAN PATENT APPLICATION

(11) **EP 3 333 433 A1**
(43) Date of publication of application: **13.06.2018**
(21) Application number: 15900075.1
(22) Date of filing: 06.08.2015
(51) Int. Cl.: F16B 4/00

(54) **STRUCTURAL MEMBER AND METHOD FOR ASSEMBLING SAME**

(71) Applicant: Reach Surgical, Inc., Tianjin 300457 (CN)
(72) Inventor: BEAUPRÉ, Jean, Cincinnatti, OH 45242 (US)
(74) Representative: Patentanwälte Bals & Vogel
(86) International application number: PCT/CN2015/086278
(87) International publication number: WO 2017/020301

(57) **Abstract**

A structural member and a method for assembling the same are provided. The structural member comprises a polymeric part, and the assembling method comprises the following steps: deforming at least one portion of the polymeric part; aligning the deformed connecting portion of the polymeric part with a connecting part; heating the deformed connecting portion of the polymeric part so as to expand the deformed connecting portion of the polymeric part and engage the same with the connecting part. When assembling the structural member that has the polymeric part by using the described assembling method, the connecting portion of the polymeric part is fixedly connected to the connecting part by means of an interference fit. Then the polymeric part and the connecting part do not need to be fixed by adhesive dispensing, and the polymeric part and the connecting part are stably connected.

## Description

### Technical Field

The present disclosure relates to a method for assembling members, and particularly to an assembly provided with at least one polymer member and a method for assembling thereof.

### Background

Shape memory polymer (SMP) is a new kind of functional polymer material. According to various induced external stimulus, there are various types of shape memory polymers, such as thermo-induced SMPs, light-induced SMPs, and acid/base-induced SMPs. Currently, thermo-induced SMP is the most common polymer, which is also named as heat shrink material. This property of polymer material is called shape memory effect. Shape memory polymers may have various types, such as cross-linked polyolefin, polyurethane, polyester, where commonly used polyolefin polymers include polyethylene (PE), ultra-high molecular weight polyethylene (UHMWPE), polyvinyl chloride (PVC), polytetrafluoroethylene (PTFE), polylactic acid (PLA) and ethylene/vinyl acetate (vinyl acetate) acetate copolymer (EVA).

Taking PTFE as an example, it is often used as a non-stick coating or easy-for-cleaning material, which has no reaction with respect to acid, alkali, or various organic solvents, and is almost insoluble in all solvents. Furthermore, combined with its high melting temperature and one of the lowest coefficients of friction of any solid, PTFE is also frequently employed as not only lubricant, but also ideal coating for inner walls of water pipes on purpose of easy-cleaning.

Members made of polymer, especially PTFE, are usually need to be assembled with other members so as to form an assembly having specific functions, however, generally PTFE members cannot be engaged with other members stably and reliably. For example, an ultrasonic instrument comprises a clamp arm (also refers to jaw member) that may be actuated to open or close by a mechanism, to thereby clamp tissue or vessels. In order to prevent a waveguide of the ultrasonic instrument from contacting directly with a metal clamp arm, it is preferred to provide the clamp arm with a PTFE tissue pad thereon.

The clamp arm of the above mentioned ultrasonic instrument further comprises a T-shaped or wedge-shaped slot for receiving at least one portion of the tissue pad, where engagement therebetween is fixed by adhesive or glue.

However, because of the properties of PTFE material, it is difficult to find an adhesive that can be attached with the tissue pad made of PTFE reliably, which makes the engagement between the tissue pad and the clamp arm unreliable. Therefore, it often happens during operation that the tissue pad slips or falls out of the slot of the clamp arm, increasing surgery risks.

Therefore, it is provided in the present disclosure a method for assembling members, at least one of which is a polymer member, so as to providing reliable engagement therebetween.

### SUMMARY

An object of the disclosure is to provide an assembly, at least one of which is provided with a polymer member, and an assembling method thereof, for providing reliable engagement between the polymer member and a connecting member.

Specifically, it is provided in the present disclosure a method for assembling members, at least one of which is provided with a polymer member, comprising steps of:
deforming at least one portion of the polymer member;
aligning the polymer member with a second member;
heating the deformed portion for engaging the portion with the second member.

It is preferred that the portion of the polymer member is in interference-fit engagement with the second member.

It is preferred that the polymer member forms a circular sealing portion around a side wall of the second member.

It is preferred that the step of deforming comprises a step of compressing at least a portion of the polymer member.

It is preferred that the step of deforming comprises a step of stretching at least a portion of the polymer member.

It is preferred that the step of compressing at least a portion of the polymer member, further comprises a step of:
compressing the portion of the polymer member through a tooling for narrowing dimensions thereof.

It is preferred that the step of stretching at least a portion of the polymer member further comprises a step of:
stretching the portion of the polymer member through a tooling for narrowing dimensions thereof.

It is preferred that the polymer member is provided with an extending portion formed through deforming.

It is preferred that further comprises a step of:
inserting the deformed portion of the polymer member into at least one aperture of the second member.

It is preferred that the method further comprises a step of:
inserting the deformed portion of the polymer member into at least one slot of the second member.

It is preferred that the step of heating further comprises a step of:
heating the deformed portion of the polymer member to above 80°C, yet below melting point thereof, allowing the deformed portion to recover.

It is preferred that the polymer member is made of fluorine polymer.

It is preferred that the polymer member is made of polytetrafluoroethylene (PTFE).

It is preferred that the polymer member is made of polyethylene (PE).

It is preferred that the polymer member is made of ultra-high molecular weight polyethylene (UHMWPE).

It is preferred that a plurality of barbs are provided on an inner wall of the second member, which are in interference-fit engagement with the portion of the polymer member after being heated.

It is preferred that the assembled members may be applied in a medical device.

It is preferred that the assembled members may be applied in a surgical instrument.

It is preferred that the assembled members may be applied in an ultrasonic surgical instrument.

It is preferred that the assembled members may be applied in the ultrasonic surgical instrument for clamping tissue.

It is preferred that the second member is a jaw member of an ultrasonic instrument, and the polymer member is a tissue pad disposed thereon.

It is further provided in the present disclosure polymer applied in any of the above described methods.

It is preferred that the polymer is fluorine polymer.

It is preferred that the fluorine polymer is polytetrafluoroethylene (PTFE).

It is preferred that the polymer is polyethylene (PE).

It is preferred that the polyethylene (PE) is ultra-high molecular weight polyethylene (UHMWPE).

It is further provided in the present disclosure an assembly of assembled members, at least one of which is provided with a polymer member, wherein after being deformed and heated, at least a portion of the polymer member is engaged with a second member.

It is preferred that after being compressed and heated, at least a portion of the polymer member is engaged with the second member.

It is preferred that after being stretched and heated, at least a portion of the polymer member is engaged with the second member.

It is preferred that the portion of the polymer member is in interference-fit engagement with the second member.

It is preferred that the polymer member forms a circular sealing portion around a side wall of the second member.

It is preferred that the polymer member comprises at least one extending portion that is formed through compressing or stretching.

It is preferred that at least one aperture is provided in the second member, adapted to be engaged with the extending portion.

It is preferred that at least one slot is provided in the second member, adapted to be engaged with the extending portion.

It is preferred that the second member is provided with two connecting members, between which a gap forms the slot for being in interference-fit engagement with at least a portion of the polymer member after being deformed and heated.

It is preferred that a plurality of barbs are provided on an inner wall of the slot; after being heated, the portion of the polymer member is in interference-fit engagement with the barbs.

It is preferred that the polymer member is made of fluorine polymer.

It is preferred that the polymer member is made of polytetrafluoroethylene (PTFE).

It is preferred that the polymer member is made of polyethylene (PE).

It is preferred that the polymer member is made of ultra-high molecular weight polyethylene (UHMWPE).

It is preferred that the assembly may be applied in a medical device.

It is preferred that the assembly may be applied in a surgical instrument.

It is preferred that the assembly may be applied in an ultrasonic surgical instrument.

It is preferred that the assembly may be applied in the ultrasonic surgical instrument for clamping tissue.

It is preferred that the second member is a jaw member of an ultrasonic instrument, and the polymer member is a tissue pad disposed thereon.

### Brief Description of Drawings

FIG. 1 is a flow chart of a method for assembling members according to one of the embodiments of the present disclosure.
FIG. 2 is a view of an assembly according to one of the embodiments of the present disclosure.
FIG. 3 is a view of a connecting portion of a polymer member has not been deformed according to one of the embodiments of the present disclosure.
FIG. 4 is a view of a connecting portion of a polymer member has been deformed according to one of the embodiments of the present disclosure.
FIG. 5 is a view of a connecting member according to one of the embodiments of the present disclosure.
FIG. 6 is a view of a deformed connecting portion of a polymer member being inserted into a slot of a connecting member according to one of the embodiments of the present disclosure.
FIG. 7 is a view of an end effector of an ultrasonic instrument. Reference signs:
   1, connecting member; 2, polymer member; 3, jaw member of an ultrasonic instrument; 4, waveguide; 11, slot; 12, barb; 21, connecting portion of the polymer member.

### Detailed Description of Embodiments

The detailed embodiments of the present invention are disclosed herein. It should be understood, however, that the disclosed embodiments are merely exemplary of the invention, which may be embodied in various forms. Therefore, the details disclosed herein are not to be interpreted as limiting, but merely as the basis for the claims and as a basis for teaching one skilled in the art how to make and/or use the invention.

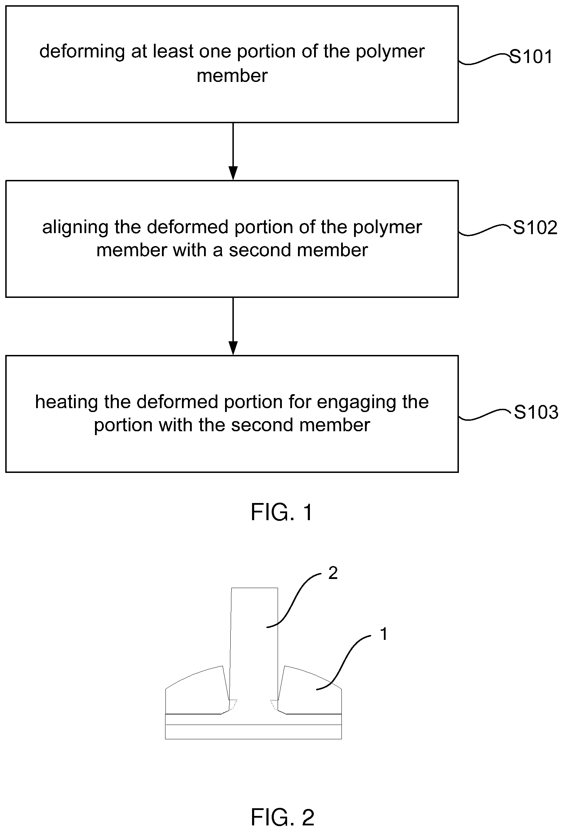

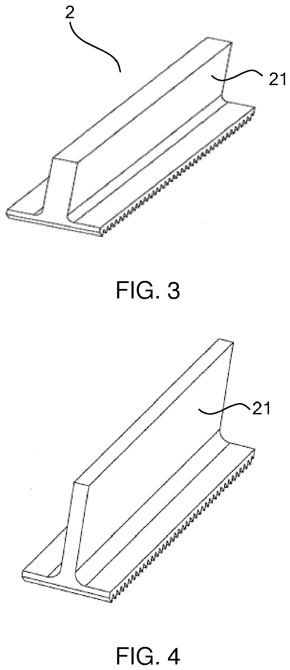

It is provided in one of the embodiments of the present disclosure an assembly and an assembling method thereof, as shown in FIG. 2, where the assembly comprises at least one polymer member 2 and a second member. In the present embodiment, the second member is designed as a connecting member 1, and, as shown in FIG. 3, the polymer member 2 is provided with a connecting portion 21 configured to be engaged with the connecting member 1. In addition or alternatively, the assembly may further comprise a plurality of polymer members 2, quantity of which is based on actual applications.

Preferably, the connecting portion 21 of the polymer member 2 may be in interference-fit engagement with the connecting member 1, therefore, an adhesive or glue would no longer be necessary for ensuring engagement therebetween, so as to enhance reliability of the engagement and facilitate assembling. It is preferred that the polymer member is made of fluorine polymer; more preferably, the polymer member is made of polytetrafluoroethylene (PTFE). In an alternative embodiment, the polymer member is made of polyethylene; more preferably, the polymer member is made of ultra-high molecular weight polyethylene (UHMWPE).

It should be noted that polymers mentioned in any one of the embodiments of the present disclosure comprise engineering polymers having shape memory effect, including but not limited to polyethylene (PE), ultra-high molecular weight polyethylene (UHMWPE), polyvinyl chloride (PVC), polytetrafluoroethylene (PTFE), polylactic acid (PLA) and ethylene-vinyl acetate (vinyl acetate) acetate copolymer (EVA), etc. Therefore, assemblies, which are made of engineering polymers having shape memory effect and assembled according to the method described herein, all fall in the scope of the present disclosure.

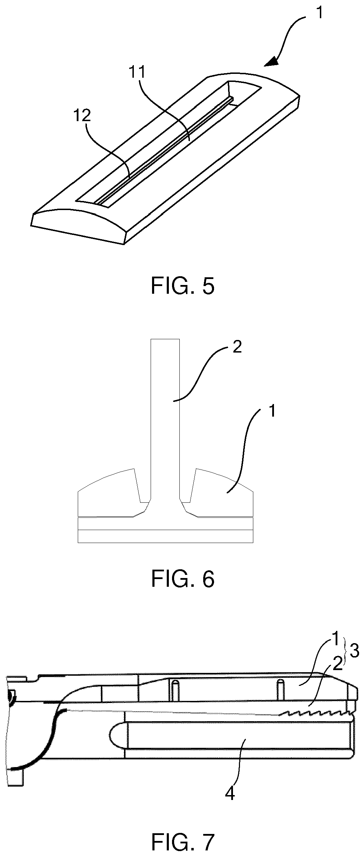

In an alternative embodiment, as shown in FIG. 5, the connecting member 1 is provided with at least one slot 11, for receiving the connecting portion 21 of the polymer member 2. Preferably, the polymer member 2 is in interference-fit engagement with the slot 11 of the connecting member 1. In an alternative embodiment, the connecting member 1 is provided with a plurality of slots 11 based on actual applications, and the polymer member 2 is provided with a plurality of connecting portions 21 for being engaged with the corresponding slots, respectively.

In an alternative embodiment, the connecting member 1 comprises at least an aperture that is configured to be engaged with the connecting portion 21 of the polymer member 2 being inserted thereinto. Preferably, the polymer member 2 is in interference-fit engagement with the connecting member 1.

Referring to FIG. 1, in one of the embodiments of the present disclosure, it is provided a method for assembling members, at least one of which is provided with a polymer member, comprising steps of:
step S101, deforming at least one portion of the polymer member. Referring to FIG. 3 and FIG. 4, the connecting portion 21 of the polymer member 2 shown in FIG. 3 has not been deformed, while shown in FIG. 4, it has been deformed,
step S102 is aligning the deformed connecting portion 21 of the polymer member 2 with the connecting member 1, for example, inserting the connecting portion 21 of the polymer member 2 into the slot 11 of the connecting member 1, as shown in FIG. 6;
furthermore, step S103 is heating the deformed connecting portion 21 of the polymer member 2, allowing the deformed connecting portion 21 to recover so as to be further engaged with the connecting member 1. It is preferred that the connecting portion 21 of the polymer member 2 is in interference-fit engagement with the connecting member 1. Alternatively, the connecting portion 21 of the polymer member 2 may also be in interference-fit engagement with the slot 11 arranged in the connecting member 1, which is preferred, to form a circular sealing portion around the side wall of the slot 11 of the connecting member 1, as shown in FIG. 2 and FIG. 5.

Deformation against the polymer member 2 may be performed in two manners during assembling thereof according to the above mentioned method, which are:
(1) compressing the polymer member 2, specifically, compressing the connecting portion 21 of the polymer member 2 through a tooling for narrowing dimensions thereof; or (2) stretching the polymer member 2, specifically, stretching the connecting portion 21 of the polymer member 2 through a tooling for narrowing dimensions thereof.

The connecting portion 21 of the polymer member 2 may be narrowed through the processes described above, allowing itself to be smoothly inserted into the slot 11 or the aperture of the connecting member 1. Further, after being heated at step S103, the connecting portion 21 of the polymer member 2 may be recovered towards its original shape, so as to be in interference-fit engagement with the slot 11 or aperture of the connecting member, based on which, adhesive is no longer necessary for improving reliabilities of engagement therebetween.

More specifically, in the step S103, heating the connecting portion 21 of the polymer member 2 for shape recovery may further comprise a step of: heating the deformed connecting portion 21 of the polymer member 2 to about 80°C-400°C, yet below the melting point thereof, allowing the deformed connecting portion 21 to recover.

It is preferred that the polymer member 2 is made of fluorine polymer; for example, the polymer member 2 is made of PTFE. The step S103 of heating the deformed connecting portion 21 thereby allows it to recover, may further comprise a step of:
heating the deformed connecting portion 21 of the PTFE member 2 to about 140°C-350°C, so as to recover the deformed connecting portion 21 to the original shape thereof. Preferably, the deformed connecting portion 21 of the PTFE member may be heated to about 300°C-350°C, to thereby make it recover. Moreover, the connecting portion 21 of the PTFE member 2 may be heated to about 340°C, to thereby make it recover.

It should be understood that the connecting member 1 may also be made of various materials, such as metal, not limited to the materials disclosed above.

In an alternative embodiment, due to high melting temperature of metal, for the connecting member 1 made of metal, the step S103 of heating the polymer member, especially the PTFE connecting portion, may further comprise a step of:
heating the polymer member, especially the PTFE member 2 in an oven, to about 200°C-350°C, allowing it to recover.

Alternatively, the polymer member 2 may also be made of polyethylene ; more preferably, polymer member 2 may be made of ultra-high molecular weight polyethylene. Accordingly, the step S103 of heating the connecting portion 21 of the polymer member 2 for shape recovery, may further comprise a step of:
heating the deformed connecting portion 21 of the member 2 made of ultra-high molecular weight polyethylene to about 80°C-140°C, to thereby make it recover. More specifically, heating the deformed connecting portion 21 to about 90°C-137°C, to thereby make it recover. More specifically, heating the connecting portion 21 to about 120°C, to thereby make it recover.

In order to improve reliability of the connection between the polymer member 2 and the connecting member 1, it is preferred, as shown in FIG. 2, FIG. 5 and FIG. 6, a plurality of barbs 12 are provided on an inner wall of the slot 11 of the connecting member 1, which are in interference-fit engagement with the connecting portion 21 of the polymer member 2 after being heated.

Furthermore, it should be noted that the slot of the connecting member 1 may also be provided with various other structures.

More specifically, for example, in one of the embodiments of the present disclosure, the connecting member 1 is provided with two connecting members, between which a gap forms a slot 11 for being in interference-fit engagement with the connecting portion 21 of the polymer member 2 after being deformed and heated. The connecting portion 21 may also be applied to seal the gap between the connecting members.

In another embodiment, the slot 11 of the connecting member 1 is provided with a blind hole, which is in interference-fit engagement with and fulfilled with the connecting portion 21 after being deformed and heated. The connecting portion 21 of the polymer member may also be employed as filler so as to fulfill the blind hole, which is not easy to slip out thereafter.

The assembly described in one of the embodiments of the present disclosure may be applied in a medical device, specifically, may be applied in a surgical instrument, particularly an ultrasonic surgical instrument. It will be further described in details as follows by taking PTFE as an example. Similarly, other polymers having the shape memory effect, such as fluorine polymer, polyethylene, ultra-high molecular weight polyethylene etc, also may be applied in one or more embodiments described below.

PTFE is widely used in medical devices due to its chemical properties and low coefficient of friction, for instance, a guiding member of medical catheter. Generally, a guiding member made of PTFE may be designed to be engaged with other members. Etching the PTFE guiding member (e.g. PTFE duct) is a common method of fixing or engaging it with a housing. However, the etching step of method may be omitted by using the method described in one of the embodiments of the present disclosure. For example, the PTFE duct may be deformed so as to be inserted into a rigid housing, and after that, the deformed PTFE duct may be further heated for recovery, such that the duct may be rigid engaged with the housing. Moreover, the PTFE duct may be radially compressed or axially stretched. Besides, the rigid housing may be provided with a rough inner wall or be provided with a plurality of barbs on the inner wall to thereby facilitate the connection therebetween.

In an alternative embodiment, a PTFE member may also be designed as a strip member for being deformed and inserted into a slot or aperture of a member made of other material, such as metal, ceramic or plastic. Reliable engagement between the members may be achieved by heating the deformed PTFE strip member for recovery. The strip member may be, for instance, a tissue pad, or a guiding member with low coefficient of friction for moving a member. In addition, the assembly and assembling method described in one of the embodiments of the present disclosure may be used in other fields where need mechanical engagement of members made of polymer, such as, mechanical equipment, computer mouse, furniture pillar, linear sliding device and surgical instruments. For example, a support pad may be arranged between a wedge and a supporting housing of a linear stapler according to the method of assembling described in one of the embodiments of the present disclosure, so as to decrease friction force therebetween. In one embodiment, at least one PTFE projection integrally formed with the support pad, which may be further engaged with the supporting housing by steps of deforming and heating, as described above. More specifically, the deformed projection may be inserted into a corresponding aperture in the supporting housing, and then be heated to recover so as to be engaged therewith.

Alternatively, the PTFE member may also be designed as a ring member, or a pad for a bearing or a valve. In addition, the assembly of one of embodiments of the present disclosure may also be employed as a sealing member. Therefore, the assembling method and the assembly described in the present disclosure may be applied in many fields, including but not limited to, toys, automobile manufacturing, machining, aerospace, construction, medical equipment, etc.

In another embodiment, the above mentioned assembly may be used in an end effector of an ultrasonic instrument. For example, as shown in FIG. 7, the connecting member 1 of the assembly provided in one of the embodiments of the present disclosure may be applied as a jaw member 3 of an ultrasonic instrument, while the polymer member 2 may be applied as a tissue pad disposed thereon. The polymer member 2 is configured to prevent the jaw member from directly contacting with a waveguide 4, thereby to prevent damages thereof. In addition, reliability of the engagement between the polymer member 2 and connecting member 1, i.e., the tissue pad and the jaw member, is improved by assembling them using the above mentioned method, which may decrease surgical risks.

Evidently those skilled in the art can make various modifications and variations to the disclosure without departing from the spirit and scope of the disclosure. Thus the disclosure is also intended to encompass these modifications and variations thereto so long as the modifications and variations come into the scope of the claims appended to the disclosure and their equivalents.

## Claims

1. A method for assembling members, at least one of which is provided with a polymer member, comprising steps of:
deforming at least one portion of said polymer member;
aligning said polymer member with a second member;
heating the deformed portion for engaging said portion with said second member.

2. The method according to claim 1, wherein said portion of said polymer member is in interference-fit engagement with said second member.

3. The method according to claim 1 or 2, wherein said polymer member forms a circular sealing portion around a side wall of said second member.

4. The method according to any one of the claims 1-3, wherein the step of deforming comprises a step of compressing at least a portion of said polymer member.

5. The method according to any one of the claims 1-3, wherein the step of deforming comprises a step of stretching at least a portion of said polymer member.

6. The method according to claim 4, wherein the step of compressing at least a portion of said polymer member, further comprises a step of:
compressing said portion of said polymer member through a tooling for narrowing dimensions thereof.

7. The method according to claim 5, wherein the step of stretching at least a portion of said polymer member further comprises a step of:
stretching said portion of said polymer member through a tooling for narrowing dimensions thereof.

8. The method according to claim 1, wherein said polymer member is provided with an extending portion formed through deforming.

9. The method according to any one of the claims 1-8, wherein further comprises a step of:
inserting the deformed portion of said polymer member into at least one aperture of said second member.

10. The method according to claim 1 or 8, wherein further comprises a step of:
inserting the deformed portion of said polymer member into at least one slot of said second member.

11. The method according to claim 1, wherein the step of heating further comprises a step of:
heating said deformed portion of said polymer member to above 80°C, yet below melting point thereof, allowing said deformed portion to recover.

12. The method according to any one of the claims 1-11, wherein said polymer member is made of fluorine polymer.

13. The method according to claim 12, wherein said polymer member is made of polytetrafluoroethylene, PTFE.

14. The method according to any one of the claims 1-11, wherein said polymer member is made of polyethylene, PE.

15. The method according to claim 14, wherein said polymer member is made of ultra-high molecular weight polyethylene, UHMWPE.

16. The method according to any one of the claims 1-15, wherein a plurality of barbs are provided on an inner wall of said second member, which are in interference-fit engagement with said portion of said polymer member after being heated.

17. The method according to any one of the claims 1-16, wherein said assembled members may be applied in a medical device.

18. The method according to claim 17, wherein said assembled members may be applied in a surgical instrument.

19. The method according to claim 18, wherein said assembled members may be applied in an ultrasonic surgical instrument.

20. The method according to claim 19, wherein said assembled members may be applied in the ultrasonic surgical instrument for clamping tissue.

21. The method according to claim 20, wherein said second member is a jaw member of an ultrasonic instrument, and said polymer member is a tissue pad disposed thereon.

22. Polymer applied in the method according to any one of the claims 1-21.

23. The polymer according to claim 22, wherein the polymer is fluorine polymer.

24. The polymer according to claim 23, wherein the fluorine polymer is polytetrafluoroethylene, PTFE.

25. The polymer according to claim 22, wherein the polymer is polyethylene, PE.

26. The polymer according to claim 25, wherein the polyethylene, PE, is ultra-high molecular weight polyethylene, UHMWPE.

27. An assembly of assembled members, at least one of which is provided with a polymer member, wherein after being deformed and heated, at least a portion of said polymer member is engaged with a second member.

28. The assembly according to claim 27, wherein after being compressed and heated, at least a portion of said polymer member is engaged with said second member.

29. The assembly according to claim 27, wherein after being stretched and heated, at least a portion of said polymer member is engaged with said second member.

30. The assembly according to any one of the claims 27-29, wherein said portion of said polymer member is in interference-fit engagement with said second member.

31. The assembly according to any one of the claims 27-30, wherein said polymer member forms a circular sealing portion around a side wall of said second member.

32. The assembly according to claim 27, wherein said polymer member comprises at least one extending portion that is formed through compressing or stretching.

33. The assembly according to claim 32, wherein at least one aperture is provided in said second member, adapted to be engaged with said extending portion.

34. The assembly according to claim 32, wherein at least one slot is provided in said second member, adapted to be engaged with said extending portion.

35. The assembly according to claim 34, wherein said second member is provided with two connecting members, between which a gap forms said slot for being in interference-fit engagement with at least a portion of said polymer member after being deformed and heated.

36. The assembly according to claim 35, wherein a plurality of barbs are provided on an inner wall of said slot; after being heated, said portion of said polymer member is in interference-fit engagement with said barbs.

37. The assembly according to any one of the claims 27-36, wherein said polymer member is made of fluorine polymer.

38. The assembly according to claim 37, wherein said polymer member is made of polytetrafluoroethylene, PTFE.

39. The assembly according to any one of the claims 27-36, wherein said polymer member is made of polyethylene, PE.

40. The assembly according to claim 39, wherein, said polymer member is made of ultra-high molecular weight polyethylene, UHMWPE.

41. The assembly according to any one of claims 27-40, wherein said assembly may be applied in a medical device.

42. The assembly according to claim 41, wherein said assembly may be applied in a surgical instrument.

43. The assembly according to claim 42, wherein said assembly may be applied in an ultrasonic surgical instrument.

44. The assembly according to claim 43, wherein said assembly may be applied in the ultrasonic surgical instrument for clamping tissue.

45. The assembly according to claim 44, wherein, said second member is a jaw member of an ultrasonic instrument, and said polymer member is a tissue pad disposed thereon.
